# EUROPÄISCHE PATENTSCHRIFT

(11) **EP 2 199 732 B1**
(45) Veröffentlichungstag und Bekanntmachung des Hinweises auf die Patenterteilung: **11.10.2017**
(21) Anmeldenummer: 08172410.6
(22) Anmeldetag: 19.12.2008
(51) Int. Cl.: G01B 5/28

(54) **Vorrichtung mit Rauheitsmesstaster**
Device with roughness measuring probe
Dispositif doté d'un capteur de rugosité

(43) Veröffentlichungstag der Anmeldung: 23.06.2010
(73) Patentinhaber: Klingelnberg AG, 8050 Zürich (CH)
(72) Erfinder: Mies, Georg, 51688 Wipperfürth (DE)
(74) Vertreter: Heusch, Christian

(56) Entgegenhaltungen:
- DE-A1- 10 054 112
- DE-B- 1 265 994
- GB-A- 577 139
- JP-A- S60 161 508
- US-A- 2 363 691
- US-A- 3 750 295
- US-A- 4 597 519
- US-A- 5 003 522
- US-A- 5 740 616
- US-A1- 2005 015 005
- US-A1- 2007 228 592

## Beschreibung

Die Erfindung betrifft Vorrichtungen mit Rauheitsmesstastern.

### HINTERGRUND DER ERFINDUNG

In vielen technischen Bereichen ist die Oberflächenstruktur eines Bauteils oder Materials ein wichtiges Qualitätsmerkmal.

Es gibt verschiedene Rauheitsmessvorrichtungen zum schnellen Erfassen der Rauheit bzw. Rauhtiefen von Oberflächen. Typischerweise wird bei der mechanischen Abtastung eine Tastspitze über die Oberfläche geführt. Das Ergebnis ist ein über dem Tastweg aufgezeichnetes Höhensignal, das so genannte Oberflächenprofil.

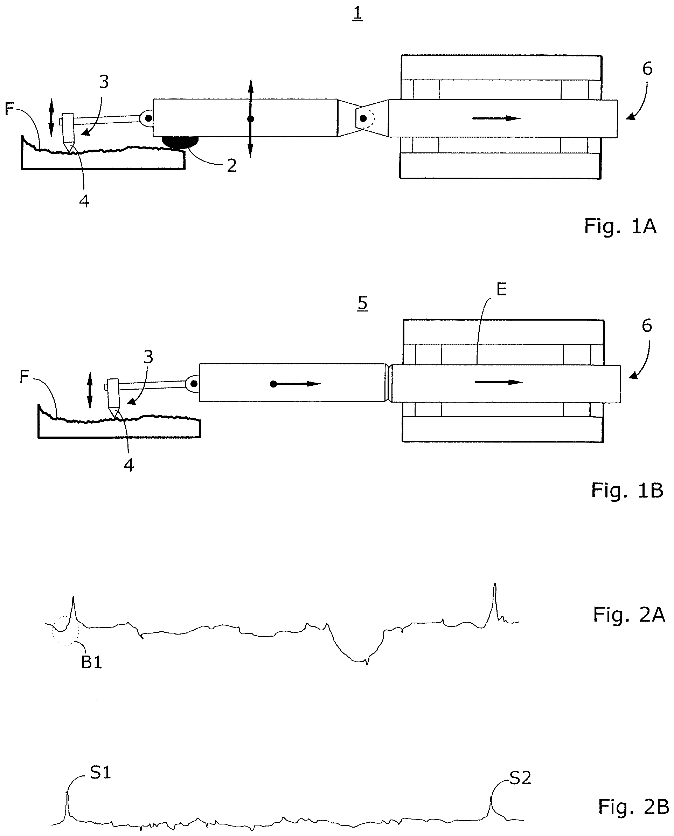

Man unterscheidet sogenannte Gleitkufentaster 1 und Bezugsebenentaster 5, wie in den Figuren 1A und 1B in schematisierter Form gezeigt. Ein Gleitkufentaster 1 hat eine Gleitkufe 2, die je nach Anwendungsgebiet einen grossen oder kleinen Radius hat und als Gleitelement dient. Der Taster 3 des Gleitkufentasters 1 liegt mit der Gleitkufe 2 auf der zu messenden Oberfläche F auf und erfasst mit der Tastspitze 4 des Tasters 3 das Oberflächenprofil relativ zur Bahn der Gleitkufe 2. Diese Gleitkufe 2 folgt während der Messung den makroskopischen Unebenheiten der Oberfläche F, also der Welligkeit und makroskopischen Form. Die Tastspitze 4 hingegen erfasst mit ihrem kleinen Spitzenradius die Oberflächenrauheit und ertastet Riefen, die von der Gleitkufe 2 überbrückt wurden, da diese einen weit grösseren wirksamen Radius aufweist. Die Gleitkufe 2 wirkt somit als eine Art Hochpassfilter.

Zur besseren Aufnahme der Welligkeit einer Oberfläche F gibt es auch Gleitkufentaster mit zwei Gleitkufen.

Ein Bezugsebenentaster 5 zeichnet sich dadurch aus, dass er starr mit einer Bezugsebene E verbunden ist. Diese Bezugsebene E befindet sich meistens im Vorschubteil 6 des Tasters 3. Eine Messung mit einem Bezugsebenentaster 5 liefert im Vergleich zum Gleitkufentaster 1 genauere und umfassendere Messergebnisse, bei der neben der Oberflächenrauheit auch die Form und die Welligkeit des Bauteils erfasst werden kann.

Einen Gleitkufentaster 1 setzt man zum Beispiel dann ein, wenn keine exakten Angaben über die Welligkeit oder 3-dimensionale Form verlangt werden. Ein Vorteil eines Gleitkufentasters 1 ist die einfache Handhabbarkeit, da Messungen schnell und ohne grosse Ausrichtungen durchgeführt werden können.

In den Figuren 2A und 2B sind die Abtastergebnisse eines Gleitkufentasters 1 (Fig. 2A) und eines Bezugsebenentasters 5 (Fig. 2B) gezeigt. Das in Fig. 2B gezeigte Abtastergebnis entspricht am besten der Realität, da ein Bezugsebenentaster 5 den wirklichen Oberflächenverlauf weitestgehend unverfälscht aufzeichnet. Besonders im Fall von tiefen Riefen oder von vereinzelten hohen Spitzen S1 und S2 (siehe Fig. 2B) machen sich die Fehler der verschiedenen Gleitkufentaster besonders bemerkbar. Charakteristisch für einen Gleitkufentaster 1 ist zum Beispiel das Verhalten vor einer Spitze S1. Die Gleitkufe 2 erreicht die Spitze S1 vor der Tastspitze 4. Dadurch wird der gesamte Taster 3 angehoben und die Tastspitze 4 ragt dann weiter nach unten aus dem umgebenden Tastergehäuse heraus. Dies wird in Fig. 2A so aufgezeichnet (siehe Bereich B1), als ob die Tastspitze 4 vor dem Erreichen der Spitze S1 scheinbar in eine Senke der Oberfläche F laufen würde. Das gleiche gilt analog beim Erreichen der Spitze S2.

Gleitkufentaster können aber auch in anderen Situationen verfälschte Ergebnisse liefern. Dies ist zum Beispiel dann der Fall, wenn sich die Bewegung der Gleitkufe 2 mit der Bewegung der Tastspitze 4 konstruktiv überlagert und damit ein zu grosses Ausgangssignal geliefert wird, oder wenn sich die Bewegungen ganz oder teilweise auslöschen und dadurch ein zu kleines Signal geliefert wird. Diese Probleme treten zum Beispiel bei periodischen Oberflächen auf. Weitere Details zu vorbekannten Rauheitsmesssystemen sind zum Beispiel dem folgenden Sachbuch zu entnehmen: "Rauheitsmessung: Theorie und Praxis", von Raimund Volk, veröffentlicht vom Beuth Verlag, 2005, ISBN 3410159185, 9783410159186.

Eine Rauheitsmessvorrichtung, die als nächstliegender Stand der Technik angesehen wird, ist aus dem Dokument JP S60 161508 A bekannt. Die Rauheitsmessvorrichtung, die in diesem Dokument beschrieben ist, umfasst ein Gleitelement und eine Tastspitze, sowie eine Vorrichtung, die es ermöglicht das Gleitelement und eine Tastspitze über eine abzutastende Oberfläche zu bewegen. Durch den Einsatz eines Gleitelement und einer Tastspitze ist es möglich Aussagen über die Form der Oberfläche und über deren Rauheit zu machen.

Häufig ist es bei 3-dimensionalen Bauteilen wichtig, eine Aussage über die lokale Übereinstimmung treffen zu können, was bedeutet, dass man bei verschiedenen Bauteilen einer Serie jeweils an der exakt gleichen Stelle die Rauheit messen muss.

Oft geht es neben der Bestimmung der Rauheit auch um die Ermittlung der 3-dimensionalen Form, also zum Beispiel der Krümmung einer Oberfläche (z.B. die Balligkeit eines Zahnes eines Zahnrades) oder gar um die Bestimmung der Geometrie.

Es ist eine Aufgabe der Erfindung eine Messvorrichtung mit einem geeigneten Messtaster bereit zu stellen, die es ermöglicht verbesserte Rauheitsmessungen durchzuführen.

Eine weitere Aufgabe der Erfindung ist es an genau vorgegebenen Positionen identischer Bauteile Rauheitsmessungen durchzuführen.

Eine weitere Aufgabe der Erfindung ist es, ein möglichst einfaches manuelles Wechseln des Rauheitsmesstasters zu gestatten.

Es ist eine weitere Aufgabe ein Messgerät mit einer Vorrichtung mit abnehmbarem Messtaster so auszulegen, dass nicht nach jedem Wechsel eine neue Kalibrierung notwendig wird. Ausserdem soll eine Beschädigung des Tastsystems verhindert werden.

Die Aufgabe wird durch eine Vorrichtung gemäß Anspruch 1 gelöst.

Eine erfindungsgemäße Vorrichtung umfasst ein Rauheitstastsystem und einen Rauheitsmesstaster mit den Merkmalen des Anspruchs 1.

Es wird auch ein Verfahren zum Abtasten einer Oberfläche beschrieben, das sich auszeichnet durch die folgenden Schritte. Es wird ein Taststift zugestellt, der ein Tast-Gleitelement an einem extremalen Ende aufweist und der in einem Abstand zu dem Tast-Gleitelement eine Tastspitze umfasst. Beim Zustellen wird das Tast-Gleitelement mit einem Punkt der Oberfläche in Kontakt gebracht. Dann wird der Taststift entlang der Oberfläche in mindestens einer Koordinatenrichtung verfahren, wobei das Tast-Gleitelement und die Tastspitze solidarisch im Abstand über die Oberfläche bewegt werden. Dabei werden erste Ausgangssignale mittels 1D-, 2D- oder 3D-Messwertgebern erfasst, die dem Tast-Gleitelement zugeordnet sind. Außerdem wird ein zweites Ausgangssignal eines Messwertgebers erfasst, welcher der Tastspitze zugeordnet ist. Die ersten Ausgangssignale und das zweite Ausgangssignal werden dann miteinander in Bezug gesetzt.

Vorteilhafte Ausgestaltungen der erfindungsgemäßen Vorrichtung bilden die Gegenstände der Ansprüche 2 bis 6.

Die Erfindung lässt sich im Zusammenhang mit 1D-, 2D- und 3D-Messvorrichtungen verwenden.

Bei der Form des Tast-Gleitelements muss es sich nicht notwendigerweise um eine ideale Kugelform handeln. Das Tast-Gleitelement kann auch eine ovale oder zylindrische Form, oder eine andere geeignete Form mit grossem Krümmungsradius haben. Das Tast-Gleitelement kann auch unterschiedliche Radien in axialer und radialer Richtung haben.

In einer bevorzugten Ausführungsform ist der Rauheitsmesstaster austauschbar. In einer weiteren bevorzugten Ausführungsform ist der Rauheitsmesstaster alternativ oder zusätzlich um eine Längsachse drehbar.

Es ist einer der Vorteil der Erfindung, dass die Vorrichtung Information über eine Oberfläche liefert, die vergleichbar oder gar besser ist als die Information, die ein Bezugsebenentaster liefert.

Es ist ein Vorteil der Erfindung, dass eine Abweichung der Bewegung des Tast-Gleitelements von der idealen Gerade oder von der idealen Bezugsebene vollständig erfasst wird. Dies geschieht durch das Erfassen der Auslenkungen des 1D-, 2D- oder 3D-Messtasters. Man kann gemäss Erfindung die Abweichung der Bewegung des Tast-Gleitelements mit einer von einer Tastspitze gleichzeitig aufgezeichneten Rauheitskurve (die durch das Signal f3 repräsentiert ist) so verrechnen und in Bezug setzen, dass man ein exakt gerades Bezugssystem erhält. Fehler, die von konventionellen Gleitkufentastern bekannt sind, können daher ausgeschlossen werden.

### ZEICHNUNGEN

Ausführungsbeispiele der Erfindung werden im Folgenden unter Bezugnahme auf die Zeichnungen näher beschrieben. Es zeigen:
- **FIG. 1A**: eine schematische Ansicht eines vorbekannten Gleitkufenmessgeräts;
- **FIG. 1B**: eine schematische Ansicht eines vorbekannten Bezugsebenenmessgeräts;
- **FIG. 2A**: eine schematische Kurve, die von einem Gleitkufenmessgerät nach Fig. 1A aufgenommen wurde;
- **FIG. 2B**: eine schematische (Referenz-)Kurve, die von einem Bezugsebenenmessgerät nach Fig. 1B aufgenommen wurde;
- **FIG. 3A**: eine Funktions-Ansicht eines vorbekannten Bezugsebenenmessgeräts;
- **FIG. 3B**: eine schematische (Referenz-)Kurve, die von einem Bezugsebenenmessgerät nach Fig. 3A aufgenommen wurde;
- **FIG. 4**: eine Funktions-Ansicht eines erfindungsgemäßen Messgeräts in einer vergleichbaren Darstellung;
- **FIG. 5**: eine perspektivische Ansicht eines vorbekannten CNC-Messgeräts;
- **FIG. 6**: den prinzipiellen Aufbau eines erfindungsgemäßen Drei-Koordinaten-Tastkopfes mit horizontaler Hauptachse, wobei der mechanische Aufbau des Tastkopfes der besseren Übersichtlichkeit wegen etwas auseinander gezogen dargestellt ist;
- **FIG. 7**: den schematischen Aufbau eines Ein-Koordinaten-Tastkopfes mit Rauheitsmesstaster, gemäß Erfindung;
- **FIG. 8A**: eine schematische Kurve, die von der Tastspitze einer erfindungsgemäßen Messvorrichtung nach Fig. 4 aufgenommen wurde;
- **FIG. 8B**: eine schematische Kurve, die von dem Tast-Gleitelement der erfindungsgemäßen Messvorrichtung nach Fig. 4 aufgenommen wurde;
- **FIG. 8C**: die um den Abstand A räumlich verschobene Kurve von Fig. 8B;
- **FIG. 8D**: die schematische dargestellt Überlagerung der Kurven von Fig. 8A und von Fig. 8C.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll.

Der Begriff Rauheit wird hier verwendet, um die Oberflächenqualität einer Oberfläche zu bezeichnen. Die Rauheit beschränkt sich eher auf mikroskopische, im Sinne von punktuellen oder lokalen Aussagen. Typischerweise geht es im Zusammenhang mit der Rauheit hier um Strukturen, Elemente und Merkmale einer Oberfläche F, die eine Grösse im Bereich von nm bis ca. 500 µm haben.

Eine Form (auch als Ebenheit bezeichnet) ist eine 2- oder 3-dimensionale Ebene oder ein aus mehreren Ebenen zusammenhängendes 3-dimensionales Gebilde im Raum. Typischerweise geht es im Zusammenhang mit der Form hier um Strukturen und Elemente, die eine Grössenausdehnung im Bereich von 0,5 mm bis ca. 10 mm haben.

Eine geometrische Form (hier auch Geometrie bezeichnet) ist eine zusammenhängende 2- oder 3-dimensionale Ebene im Raum oder ein aus mehreren Ebenen zusammenhängendes 3-dimensionales Gebilde im Raum, die mit mathematischen Mitteln exakt definiert werden kann. Typischerweise geht es im Zusammenhang mit der Geometrie hier um 3-dimensionale Bauteile oder Elemente, die eine Grössenausdehnung im Bereich von wenigen cm bis ca. 100 cm oder sogar grösser haben.

Als Form wird hier insbesondere die Ebenheit, die Krümmung einer Oberfläche oder zum Beispiel die Balligkeit von Zähnen einer Verzahnung, der Verlauf von Stufen oder Treppen, die Flankenline von Zähnen einer Verzahnung, die Neigung einer Fläche und dergleichen verstanden. Um die Form auswerten oder abtasten zu können, müssen typischerweise mehrere Messpunkte entlang einer Line, Kurve oder Fläche abgetastet werden. Daher sprechen wir hier auch von makroskopischen Aussagen.

Die Rauheitsmessung wird vorzugsweise mit einer höheren Auflösung (d.h. mit hoher Ortsauflösung) vorgenommen als die (Ver-)Messung der Form.

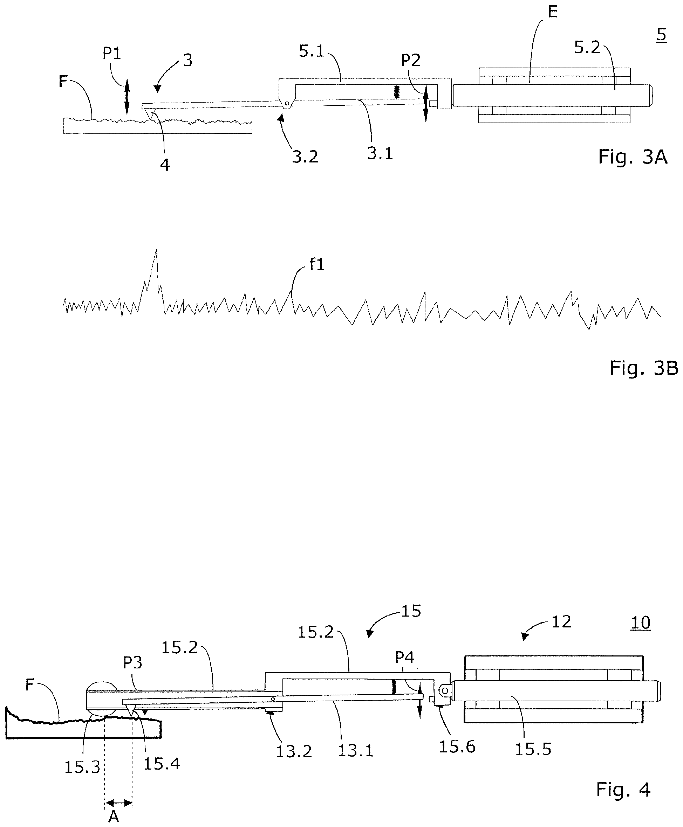

In den Figuren 3A und 4 sind ein konventioneller Bezugsebenentaster 5 und ein erfindungsgemäßes Messgerät 10 in Funktions-Ansichten einander gegenüber gestellt. Die Darstellung wurde bewusst so gewählt, dass sich die einzelnen Elemente besser vergleichen lassen. In Fig. 3A ist zu erkennen, dass der vordere Bereich des Tasters einen Hebelarm 3.1 aufweist, der um ein Drehlager 3.2 schwenkbar gelagert ist. Am nach hinten gerichteten Ende des Hebelarms 3.1 ist eine Zugfeder 3.3 vorgesehen. Die Elemente 5.1 und 5.2 sind starr miteinander verbunden und definieren dadurch die Bezugsebene E. Eine Auf- und Abbewegung der Tastspitze 4 am vorderen Ende des Hebelarms 3.1 (siehe Doppelpfeil P1) erzeugt eine entsprechende Auf- und Abbewegung (siehe Doppelpfeil P2) am hinteren Ende des Hebelarms 3.1. Diese Bewegung am hinteren Ende des Hebelarms 3.1 kann von einem Messwertgeber aufgezeichnet werden. Daraus ergibt sich zum Beispiel das in Fig. 3B gezeigte Signal f1 als Funktion einer Strecke (zum Beispiel der negativen y-Richtung), das der eigentlichen Oberfläche F weitestgehend entspricht. Dieser Signalverlauf f1 wird daher als Abbild der tatsächlichen Oberfläche F angenommen.

Die erfindungsgemäße Vorrichtung 10 umfasst gemäß Fig. 4 einen Rauheitsmesstaster 15, wobei ein Gleitelement 15.3 und eine Tastspitze 15.4 zum Einsatz kommen. Als Gleitelement dient hier ein Tast-Gleitelement 15.3, das an einem extremalen Ende eines Taststifts 15.2 angeordnet ist. Der Taststift 15.2 ist vorzugsweise hohl oder röhrenförmig ausgeführt, wie in Fig. 4 angedeutet. Die Tastspitze 15.4 ist in den Taststift 15.2 integriert, wobei der Abstand A zwischen dem tiefsten Punkt des Tast-Gleitelements 15.3 und der Tastspitze 15.4 vorgegeben ist. Im Inneren des Taststifts 15.2 sitzt ein Hebelarm 13.1, der um ein Drehlager 13.2 schwenkbar gelagert ist. Am nach hinten gerichteten Ende des Hebelarms 13.1 ist eine Zugfeder 13.3 vorgesehen. Eine Auf- und Abbewegung der Tastspitze 15.4 am vorderen Ende des Hebelarms 13.1 (siehe Doppelpfeil P3) erzeugt eine entsprechende Auf- und Abbewegung (siehe Doppelpfeil P4) am hinteren Ende des Hebelarms 13.1.

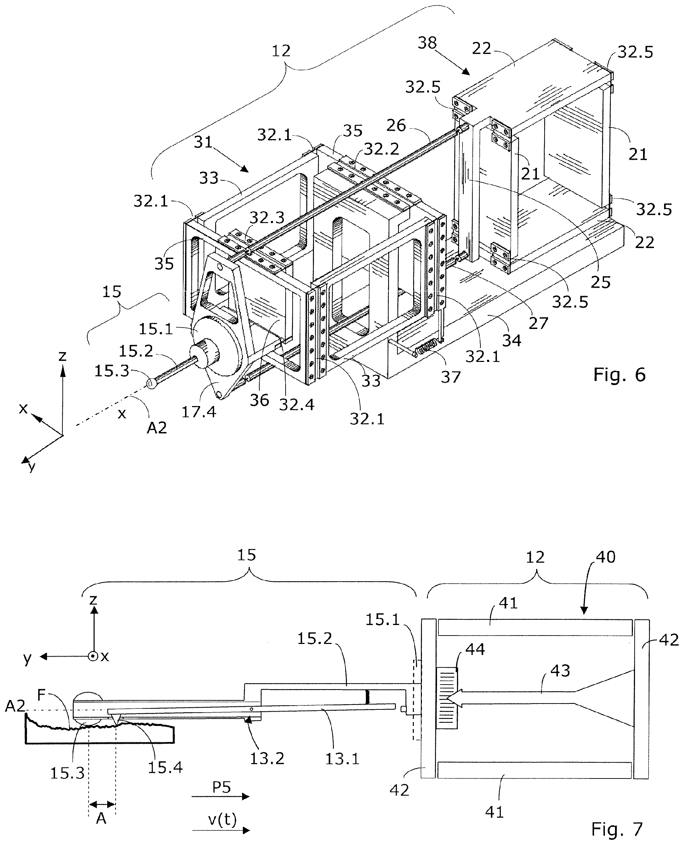

Der Taststift 15.2 und das Element 15.5 sind beweglich miteinander verbunden, wie durch das Gelenk 15.6 angedeutet. In dem Messgerät 10 wird diese bewegliche Verbindung durch einen (Feder-)Parallelogrammaufbau realisiert, der als Gelenkkette dient, wie im Folgenden beschrieben wird. Dieser Parallelogrammaufbau ist Teil eines 1D-, 2D- oder 3D-Tastsystems 12 (wie zum Beispiel in Fig. 6 gezeigt).

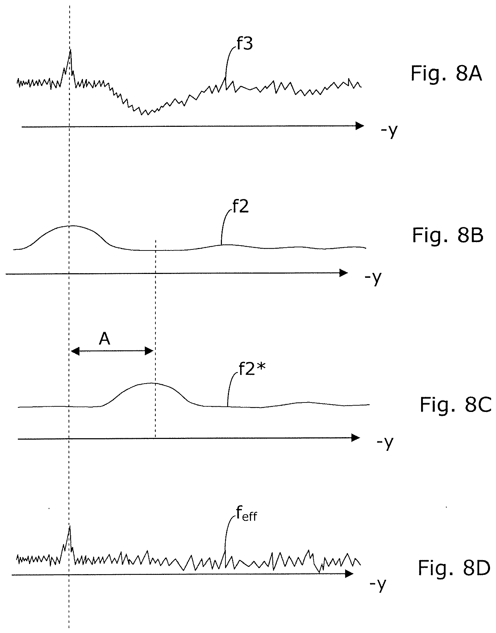

Gemäß Erfindung wird der Taststift 15.2 samt Tast-Gleitelement 15.3 und Tastspitze 15.4 solidarisch über die abzutastende Oberfläche F bewegt. Dabei erzeugen sowohl das Tast-Gleitelement 15.3, das über den Taststift 15.2 mit dem Parallelogrammaufbau verbunden ist, Signale (hier als Signale f2 bezeichnet), als auch die Tastspitze 15.4, die in den Taststift 15.2 integriert ist, ein Signal (hier als Signal f3 bezeichnet). In Figur 8A ist ein beispielhaftes Signal f3 und in Fig. 8B ist ein beispielhaftes Signal f2 gezeigt.

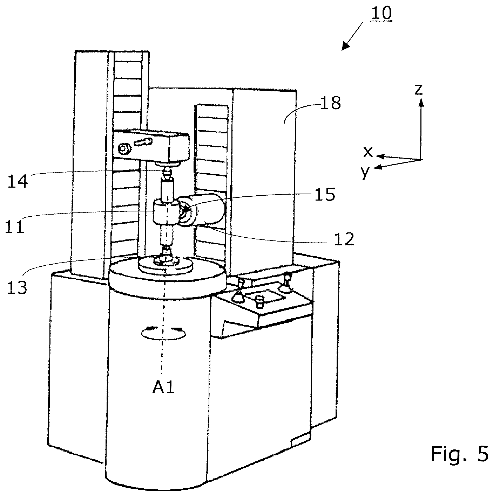

In einer vorteilhaften Ausführungsform der Erfindung, die in Fig. 5 gezeigt ist, geht es um ein vollautomatisches, CNC-gesteuertes Messgerät 10. Das Messgerät 10 ist zum Beispiel geeignet zum Prüfen der Oberflächenrauheit, Form oder Geometrie von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Bauteilen, zur Kurven- und Nockenwellenmessung oder auch zur Rotormessung, um nur einige Einsatzmöglichkeiten aufzuzählen.

Das Messgerät 10 umfasst einen über eine Ansteuerung (nicht sichtbar, da die Ansteuerung hinter der Verkleidung sitzt) antreibbaren Mitnehmer 13 und ein Zentriermittel 14, wobei der Mitnehmer 13 und das Zentriermittel 14 so angeordnet sind, dass ein zu vermessendes Bauteil 11 koaxial zwischen Mitnehmer 13 und Zentriermittel 14 einspannbar ist, wie in Fig. 5 anhand eines stilisierten Zylinderrades 11 gezeigt.

Das Messgerät 10 umfasst, wie in Fig. 5 gezeigt, mindestens einen Messtaster 15 zum dreidimensionalen Vermessen (Drei-Koordinaten-Tastsystem) des in dem Messgerät 10 eingespannten Bauteiles 11. Vorzugsweise ist ein Tastsystem 12 vorgesehen, das in der Höhe verschoben werden kann, wie durch die Koordinatenachse z in dem x-y-z-Koordinatensystem angedeutet. Ausserdem kann der Messtaster 15 weitere Zustellbewegungen ausführen (vorzugsweise kommt hier eine 4-Achsen Bahnsteuerung zum Einsatz), wie durch die senkrecht zueinander stehenden Koordinatenachsen x und z angedeutet.

In Fig. 6 ist die perspektivische Ansicht des 3D-Tastsystems 12 eines Messgeräts 10 gezeigt, das gleich oder ähnlich aufgebaut ist wie das in Fig. 5 andeutungsweise gezeigte Tastsystem 12. Es werden daher die gleichen Referenznummern verwendet. Im Folgenden werden nur die zum Verständnis der Erfindung wesentlichen Elemente erläutert. Zum technischen Hintergrund bezüglich weiterer Details zu einem solchen Messgerät 10 wird zum Beispiel auf die Patentschrift DE 19721015 (Drei-Koordinaten-Tastkopf) oder die Offenlegungsschrift DE 19501178 (Zwei-Koordinaten-Tastkopf) verwiesen.

Gezeigt ist ein Tastsystem 12 in horizontaler Bauweise das, wie gesagt, Teil eines numerisch gesteuerten Messgeräts 10 ist und das mit einem in mehreren Freiheitsgraden parallel zu sich selbst auslenkbaren Taststift 15.2 ausgestattet ist. Der Taststift 15.2 ist über mehrere funktionell senkrecht zueinander angeordnete Federparallelogramm-Systeme 31, 38 an einer festen Tastkopfbasis 34 angelenkt. Diese Federparallelogramm-Systeme 31, 38 bilden den weiter oben erwähnten Parallelogrammaufbau, an dem der Messtaster 15 gelagert ist. Die Auslenkungen des Tast-Gleitelements 15.3 samt Taststift 15.2 werden durch zwei oder drei an der Tastkopfbasis 34 befestigte (1D-, 2D- oder 3D-) Messwertgeber erfasst, die jedoch hier nicht gezeigt sind. Diese Messwertgeber liefern die Signale f2.

Der in Fig. 6 dargestellte Tastkopf besitzt einen Messtaster 15 und ein Tastsystem 12. Das Tastsystem 12 weist eine winkelförmige Tastkopfbasis 34 (in Form eines liegenden L's) auf, die an einem Turm 18 (siehe Fig. 5) des nicht näher dargestellten Messgeräts 10 befestigt ist. An einem vorderen Teil der Tastkopfbasis 34 ist ein erstes Federparallelogramm 31 beweglich aufgehängt. Es umfasst je zwei gleich lange, paarweise angeordnete Elemente 33 und 35, die durch vier Federgelenke 32.1 mit vertikalen Achsen (d.h. Achsen, die parallel zur z-Achse verlaufen) untereinander verbunden sind und Parallelverschiebungen des vorderen Elements 35 in der x-Richtung ermöglichen. Die Aufhängung des ersten Federparallelogramms 31 ist so ausgeführt, dass das gesamte Federparallelogramm 31 um die horizontale Achse (d.h. eine Achse, die parallel zur x-Achse verläuft) eines weiteren Federgelenks 32.2 schwenkbar ist. Das Federparallelogramm 31 ist vorzugsweise mit Blattfedern (nicht gezeigt) stabilisiert. Eine einstellbare Zugfeder 37 sorgt für den erforderlichen Gewichtsausgleich, so dass das erste Federparallelogramm 31 bei unausgelenktem Tastkopf eine horizontale Lage in der x-y-Ebene einnimmt. Die Zugfeder 37 ist in Fig. 6 nur schematisch gezeigt.

Es ist ein Verbindungselement 36 zwischen dem ersten Federparallelogramm 31 und dem Taststiftträger 17.4 vorgesehen. Es ist an der Oberseite mit zum Federgelenk 32.2 parallelen Federgelenken 32.3 an einer oberen Kante des Elements 35 und an der Unterseite mit einem weiteren zum Federgelenk 32.2 parallelen Federgelenk 32.4 an dem Taststiftträger 17.4 beweglich verbunden. Von diesem Verbindungselement 36 wird der Taststiftträger 17.4 aber noch nicht ausreichend gehalten. Dafür können zusätzlich noch zwei im vertikalen Abstand angeordnete Doppelgelenkstäbe 26 und 27 am Taststiftträger 17.4 angebracht sein, die sich an einem vertikalen Steg 25 abstützen. Der Steg 25 gehört zu einem zweiten Federparallelogramm 38, das von je zwei gleich langen, paarweise angeordneten Elementen 21 und 22 gebildet wird, die durch vier Federgelenke 32.5 mit horizontalen Achsen untereinander verbunden sind. Dieses zweite Federparallelogramm 38 ist mit dem unteren Element 22 so auf der Tastkopfbasis 34 befestigt, dass Parallelverschiebungen des oberen Elements 22 in y-Richtung möglich sind. An diesem oberen Element 22 ist der vertikale Steg 25 befestigt. Mit dieser Anordnung wird gewährleistet, dass der Taststiftträger 17.4 gleichzeitig in x-, y- und z-Richtung auslenkbar ist und er sich dabei jedoch nur parallel zur Längsachse A2 verschiebt. Die beiden Doppelgelenkstäbe 26, der Steg 25 und der Taststiftträger 17.4 bilden ein Parallelogramm für die Bewegung in z-Richtung. Die Torsionssteifigkeit um die y-Achse wird durch das Parallelogramm 31 und das Verbindungselement 36 mit den beiden daran befindlichen Blattfedern erreicht.

In Fig. 6 kann man weiter erkennen, dass der Taststift 15.2 auf einer Art (Wechsel-)Teller 15.1 sitzt. Der Teller 15.1 ist an dem Taststiftträger 17.4 des Tastsystems 12 befestigbar. Die Befestigung erfolgt zum Beispiel über eine Hebelanordnung, die in Fig. 6 nicht zu erkennen ist. Eine besonders geeignete Hebelanordnung ist der Patentanmeldung EP 1 589 317 zu entnehmen, die am 23.4.2004 eingereicht wurde und den Titel "VORRICHTUNG MIT ABNEHMBAREM MESSTASTER UND MESSGERÄT MIT EINER SOLCHEN VORRICHTUNG" trägt.

In einer bevorzugten Ausführungsform der Erfindung ist der Taststift 15.2 so mit dem Teller 15.1 verbunden, dass der Taststift 15.2 um seine Längsachse A2 gedreht werden kann. Durch das Drehen um diese Längsachse A2, kann die Tastspitze 15.4 in verschiedene Richtungen gerichtet werden. Somit können nicht nur Oberflächen F in der x-y-Ebene, sondern auch andere Oberflächen abgetastet werden.

Das beschriebene Parallelogrammsystem hat den Vorteil, dass es für den Messtaster 15 eine torsionssteife und reibungsarme Basis bildet. Das dynamische Verhalten des Messtasters 15, wenn er auf dem Tastsystem 12 montiert ist, ist in allen Auslenkrichtungen (Koordinatenrichtungen) hinreichend gleich. Der Parallelogrammaufbau dient als Gelenkkette zwischen dem räumlich beweglichen Messtaster 15 und der Tastkopfbasis 34. Durch die beschriebene Art der Anordnung der einzelnen Elemente des Tastsystems 12 wird gewährleistet, dass der Messtaster 15 gleichzeitig in x-, y- und z-Richtung auslenkbar ist und sich dabei nur parallel zu sich selbst verschiebt.

Weitere Details eines anderen erfindungsgemäßen Tastkopfs sind der Fig. 7 zu entnehmen. Dieser Tastkopf ist ähnlich aufgebaut wie der in Fig. 6 gezeigte Tastkopf, wobei es sich hier jedoch um einen 1D-Tastkopf handelt. Es werden daher dieselben Bezugszeichen verwendet. Bei Fig. 7 handelt es sich aber um eine weiter schematisierte Abbildung. Der Messtaster 15 weist einen Taststift 15.2 mit einem Tast-Gleitelement 15.3 auf. In diesem Zusammenhang sei angemerkt, dass es sich bei der Form des Tast-Gleitelements 15.3 nicht notwendigerweise um eine ideale Kugelform handeln muss. Das Tast-Gleitelement 15.3 kann auch eine ovale oder zylindrische Form, oder eine andere geeignete Form mit grossem Krümmungsradius haben. Das Tast-Gleitelement 15.3 dient nämlich gemäß Erfindung als Gleitkufe, analog zu einer Gleitkufe eines Gleitkufenmessgeräts 1. Das Tast-Gleitelement 15.3 wird beim Messen der Rauheit über eine abzutastende Oberfläche F gezogen oder bewegt und muss daher einen ausreichend grossen Krümmungsradius haben. Das Tast-Gleitelement 15.3 hat bei einer bevorzugten Ausführungsform in axialer Richtung (d.h. in Richtung von A2) einen Radius von 10 mm und in radialer Richtung einen Radius von 1 mm. Ein großer Radius ist natürlich von Vorteil. Da der als Kufe wirksame Teil des Tast-Gleitelements 15.3 nur einen Ausschnitt aus dem Radius enthält, um einen kleinen Abstand A zur Tastspitze 15.4 zu erreichen, sollte der Radius aber nicht unnötig groß gewählt werden, weil sonst die Gefahr besteht, dass die Kante dieser Kufe über die Oberfläche F gleitet. Dadurch entstehen Messfehler, weil die Kante einen sehr kleinen Radius hat.

Die Tastspitze 15.4 hat vorzugsweise einen Spitzenradius von wenigen µm. Besonders bevorzugt sind Tastspitzen, die einen Spitzenradius im Bereich 2 bis 10 µm haben.

Zusätzlich zu dem Tast-Gleitelement 15.3 besitzt der Messtaster 15 eine integrierte Tastspitze 15.4, wie bereits beschrieben. Diese Tastspitze 15.4 sitzt in einem kleinen Abstand A hinter (oder neben) dem untersten Punkt des Tast-Gleitelements 15.3. Ideal wäre ein Abstand A von Null. Das lässt sich aber bei Tast-Gleitelementen 15.3, die in zwei Richtungen gewölbt sind, nicht realisieren. Bei einem kugelförmigen Tast-Gleitelement 15.3 wäre das Anbringen einer Bohrung zur Aufnahme der Tastspitze 15.4 nicht sinnvoll, da dann die Kanten der Bohrung die Oberfläche F berühren würden. Im gezeigten Beispiel beträgt der Abstand A = 1,5 mm. Im Allgemeinen liegt bei den erfindungsgemässen Ausführungsformen der Abstand A zwischen 1,5 und 5 mm. Diese Tastspitze 15.4 ist, wie auch in Fig. 4, schwebend gelagert, um Strukturen, Elemente und Merkmale der Oberfläche F, die eine Grösse im Bereich von nm bis ca. 500 µm haben, ertasten oder messen zu können.

Die Tastspitze 15.4 kann auch direkt in das Tast-Gleitelement 15.3 integriert sein. Dies geht jedoch nur bei Tast-Gleitelementen 15.3, die nur senkrecht zur Bewegungsrichtung einen Radius aufweisen. Solche Tast-Gleitelemente 15.3 sind aber problematisch, da die nicht gekrümmte Richtung des Tast-Gleitelements 15.3 genau parallel zur Oberfläche F ausgerichtet sein sollte.

Der Messtaster 15 sitzt bei der Fig. 7 gezeigten Ausführungsform an einem Parallelogrammaufbau 40. Optional kann der Messtaster 15 über einen (Wechsel-) Teller 15.1 und/oder die Elemente 17.4, 32.4, 36 und 32.3 nach Fig. 6 mit dem Federparallelogrammaufbau 40 verbunden sein. Diese Elemente und Bauteile sind in der schematischen Darstellung in Fig. 7 nicht gezeigt. Der optionale (Wechsel-) Teller 15.1 ist gestrichelt gezeigt.

Der Parallelogrammaufbau 40 umfasst zwei parallele Elemente 41 und zwei dazu senkrecht stehende andere parallele Elemente 42. Das hintere Element 42 kann als Referenzbasis dienen. In diesem Fall ist das hintere Element zum Beispiel mit dem Turm 18 oder mit der Tastkopfbasis 34 verbunden. An der Referenzbasis kann ein Zeigerelement 43 oder Kragarm vorhanden sein. Wenn nun das Tast-Gleitelement 15.3 samt dem Taststift 15.2 parallel zu z-Richtung ausgelenkt wird, dann verlagert sich das vordere Element 42 in der x-z-Ebene. Diese Lateralbewegung in der x-z-Ebene drückt sich aus in einer relativen Bewegung des Zeigerelements 43 oder Kragarms in Bezug auf den 1D-Messgeber 44. Dieser Messgeber 44 ist in Form einer linearen Skala stilisiert dargestellt. Der Messgeber 44 kann somit ein Signal f2 liefern, das eine Aussage über die Form der Oberfläche F zulässt.

Das Messgerät 10 kann das Tast-Gleitelement 15.3 zum Beispiel vertikal und radial an das zu prüfende Bauteil 11 (siehe z.B. das Zylinderrad 11 in Fig. 5) heran führen, wobei die Längsachse A2 des Taststiftes 15.2 eine horizontale Lage hat. Weiterhin kann das Messgerät 10 das Bauteil 11 dabei drehen oder bewegen, bis das Tast-Gleitelement 15.3 es an einer vorgebbaren Oberfläche F berührt. So kann zum Beispiel die gekrümmte Zahnfläche des Bauteils 11 in einem Startpunkt angetastet werden. Zu diesem Zweck ist der Messtaster 15 mittels Zustellbewegungen im x-y-z-Koordinatensystem zustellbar und aufgrund des speziellen Parallelogrammaufbaus auch in einer, zwei oder in allen drei Koordinatenrichtungen x, y, z des Raumes auslenkbar, wie oben beschrieben.

Nun wird das Tast-Gleitelement 15.3 ausgehend von dem Startpunkt bis zu einem Endpunkt über die Oberfläche F bewegt. Vorzugsweise wird das Tast-Gleitelement 15.3 über diese Oberfläche F gezogen, wie in Fig. 7 durch den Pfeil P5 angedeutet. Die Tastspitze 15.4 läuft bei gezogenem Tast-Gleitelement 15.3 voraus. Falls das Tast-Gleitelement 15.3 über die Oberfläche geschoben wird, so läuft die Tastspitze 15.4 hinterher.

Das erfindungsgemäße Messgerät 10 liefert zwei Ausgangssignale f2 und f3, die zueinander in Bezug gesetzt werden. Dass erste Ausgangssignal f2 stammt, wie bei einem vorbekannten 1D-, 2D- oder 3D-Messgerät, vom Abtasten der Oberfläche mit dem Tast-Gleitelement 15.3. Ein beispielhaftes Messsignal f2 ist in Fig. 8B gezeigt. Es handelt sich hier um ein Messsignal f2, das erzeugt wurde während das Tast-Gleitelement 15.3 in -y Richtung über die Oberfläche F gezogen wurde. Das zweite Ausgangssignal f3 stammt von der Tastspitze 15.4. Auch dieses Messsignal f3 wurde erzeugt, während die Tastspitze 15.4 in -y Richtung über die Oberfläche F gezogen wurde. Das erste und das zweite Ausgangssignal f2 und f3 stehen sowohl räumlich als auch zeitlich zueinander in Bezug.

Das erfindungsgemäße Messgerät 10 erfasst mit der beschriebenen Messanordnung alle Auslenkungen des Tast-Gleitelements 15.3 entlang einer Geraden (bei einer 1D-Messung), in der x-z-Ebene (bei einer 2D-Messung) oder in dem von den drei Koordinatenrichtungen x, y und z aufgespannten Raum (bei einer 3D-Messung). Die Auslenkungen in der z-Ebene können durch ein 1D-Messgerät erfasst werden, wie zum Beispiel in Fig. 7 dargestellt. Die Auslenkungen im 3- oder 2-dimensionalen Raum werden durch das erste Ausgangssignal f2 repräsentiert (siehe Fig. 8B).

In einer ersten Ausführungsform der Erfindung wird nur der räumliche Bezug verwendet, um die beiden Ausgangssignale f2 (siehe Fig. 8B) und f3 (siehe Fig. 8A) zueinander in Bezug zu setzen. Wenn das Tast-Gleitelement 15.3 entlang einer geraden Line parallel zur negativen y-Achse über die abzutastende Oberfläche F gezogen wird, dann ist das Ausgangssignal f3 der Tastspitze 15.4 genau um den Abstand A zwischen Tast-Gleitelement 15.3 und Tastspitze 15.4 linear gegeneinander versetzt. Eine lineare Verschiebung von f2 erzeugt ein räumlich verschobenes Signal f2*, das in Fig. 8C schematisch dargestellt ist. Dann können die Signale f2* und f3 durch Addition überlagert werden. Die Überlagerung resultiert in einem Signal f_{eff} und kann durch einfaches Aufsummieren f_{eff} = f2* + f3 erfolgen. Man kann aber bei der Überlagerung auch andere Funktionen anwenden. So kann zum Beispiel das Signal f3 stärker gewichtet werden als das Signal f2*.

In einer weiteren Ausführungsform der Erfindung werden sowohl der räumliche als auch der zeitliche Bezug verwendet. Man kennt den zeitlichen Bezug daher, dass das Tast-Gleitelement 15.3 zusammen mit der Tastspitze 15.4 in einer vorgegebenen oder bekannten Geschwindigkeit v(t) über die Oberfläche F geführt wird. Aufgrund der Trägheit des Tast-Gleitelements 15.3 und vor allem auch der Tastspitze 15.4, können je nach Geschwindigkeit v(t) etwas andere Ergebnisse erzielt werden. Dies wird anhand eines Beispiels deutlich, wo die Verfahrgeschwindigkeit v(t) so gross ist, dass das Tast-Gleitelement 15.3 und/oder die Tastspitze 15.4 Merkmale der Oberfläche F überspringen.

Der Messtaster 15 ist extrem empfindlich und es ist beim schnellen Vermessen wichtig, dass der Messtaster 15 beim Bewegen in dem durch die Koordinatenachsen x, y und z aufgespannten Raum oder beim Bewegen des Bauteils 11 um die Achse A1 nicht mit dem Bauteil 11 kollidiert. Ausserdem muss je nach Messprotokoll ein anderer Messtaster 15 eingesetzt werden können.

Es ist ein Vorteil der Erfindung, dass die Tastspitze 15.4 durch das "Rohr" 15.2 des Tasters einigermaßen geschützt ist. Durch die Anordnung des Tasters 15 an einem 3D-Messtaster werden bei Kollisionen dessen Sicherungssysteme in vollem Umfang wirksam.

Es werden, wie bereits erwähnt, vorzugsweise auswechselbare Messtaster 15 eingesetzt. Die Wechselfunktion ist vorzugsweise in den Wechselteller 15.1 integriert.

Es kann auch ein 1D-, 2D- oder 3-D Messtaster 15 eingesetzt werden, bei dem die Tastspitze 15.4 bei Nichtgebrauch zurück gezogen werden kann. Zu diesem Zweck kann zum Beispiel im Inneren des Taststifts 15.2 ein Elektromagnet eingebaut sein, das beim Einschalten eine magnetische Anziehungskraft auf die nach Innen gerichtete Seite der Tastspitze 15.4 oder auf den Hebelarm 13.1 ausübt. Dadurch kann die Tastspitze 15.4 zurückgezogen werden. Man kann dann zum Beispiel konventionelle 1D-, 2D- oder 3D-Tastmessungen mit dem Tast-Gleitelement 15.3 durchführen, um dann bei Bedarf den Elektromagneten abzuschalten und die Tastspitze 15.4 zum Einsatz zu bringen.

In einer weiteren Ausführungsform der Erfindung ist die Tastspitze 15.4 samt Hebelarm 13.1 seitlich neben dem Tast-Gleitelement 15.3 angeordnet.

Zum technischen Hintergrund bezüglich weiterer Details zur genauen Funktionsweise der Vorrichtung 10 wird auf die Patentschrift DE 19721015 "Universeller Tastkopf für Verzahnungsmessungen" verwiesen.

| | |
|---|---|
| Gleitkufentaster | 1 |
| Gleitkufe | 2 |
| Taster | 3 |
| Hebelarm | 3.1 |
| Drehlager | 3.2 |
| Zugfeder | 3.3 |
| Tastspitze | 4 |
| Bezugsebenentaster | 5 |
| Elemente des Bezugsebenentasters | 5.1, 5.2 |
| Vorschubteil | 6 |
| | |
| Messgerät | 10 |
| Bauteil | 11 |
| Tastsystem | 12 |
| Mitnehmer | 13 |
| Hebelarm | 13.1 |
| Drehlager | 13.2 |
| Zugfeder | 13.3 |
| Zentriermittel | 14 |
| (Rauheits)Messtaster | 15 |
| Wechselteller | 15.1 |
| Taststift | 15.2 |
| Tast-Gleitelement | 15.3 |
| Tastspitze | 15.4 |
| Element | 15.5 |
| Gelenk | 15.6 |
| Taststiftträger | 17.4 |
| Turm | 18 |
| | |
| paarweise angeordnete Elemente | 21 |
| paarweise angeordneten Elemente | 22 |
| | |
| vertikaler Steg | 25 |
| Doppelgelenkstab | 26 |
| Doppelgelenkstab | 27 |
| | |
| erstes Federparallelogramm | 31 |
| Federgelenke | 32.1, 32.2, 32.3, 32.4, 32.5 |
| paarweise angeordnete Elemente | 33 |
| Tastkopfbasis | 34 |
| paarweise angeordnete Elemente | 35 |
| Verbindungselement | 36 |
| Zugfeder | 37 |
| zweites Federparallelogramm | 38 |
| | |
| Parallelogrammaufbau | 40 |
| paarweise angeordnete Elemente | 41 |
| paarweise angeordnete Elemente | 42 |
| Referenz | 43 |
| Stilisierter Messwertgeber | 44 |
| | |
| Abstand | A |
| Rotationsachse | A1 |
| Längsachse | A2 |
| Bezugsebene | E |
| Oberfläche | F |
| Signal des Bezugsebenentasters | f1 |
| Signal des 2D oder 3D Tastkopfes | f2 |
| Verschobenes Signal f2 | f2* |
| Signal der Tastspitze | f3 |
| Überlagertes Signal | f_{eff} |
| Doppelpfeile | P1, P2, P3; P4 |
| Pfeil | P5 |
| Koordinaten | X, Y, Z |
| Geschwindigkeit | v(t) |

## Patentansprüche

1. Vorrichtung (10) mit einem Rauheitstastsystem (12) und einem Rauheitsmesstaster (15), wobei der Rauheitsmesstaster (15) einen Taststift (15.2), ein Gleitelement und eine Tastspitze (15.4) umfasst, wobei
- das Gleitelement in Form eines Tast-Gleitelements (15.3) an einem extremalen Ende des Taststifts (15.2) angeordnet ist,
- die Tastspitze (15.4) in den Taststift (15.2) integriert ist, wobei ein Abstand (A) zwischen dem Tast-Gleitelement (15.3) und der Tastspitze (15.4) vorgegeben ist,
- die Vorrichtung (10) eine Zustellvorrichtung umfasst, die es ermöglicht den Taststift (15.2) samt Tast-Gleitelement (15.3) und Tastspitze (15.4) solidarisch über eine abzutastende Oberfläche (F) zu bewegen,
- das Rauheitstastsystem (12) ein 1D-, 2D- oder 3D-Tastsystem ist, das einen Parallelogrammaufbau (31, 38; 40) hat,
- die Vorrichtung (10) einen 1D-, 2D- oder 3D-Messwertgeber (44) zum Erfassen von ersten Signalen (f2) umfasst, der dem Tast-Gleitelement (15.3) zugeordnet ist,
- die Vorrichtung (10) einen weiteren Messwertgeber zum Erfassen eines zweiten Signals (f3) umfasst, welcher der Tastspitze (15.4) zugeordnet ist, wobei
- die ersten Signale (f2) eine Aussage über die Form oder Geometrie der abzutastenden Oberfläche (F) zulassen, und das zweite Signal (f3) eine Aussage über die Rauheit der abzutastenden Oberfläche (F) zulässt.

2. Vorrichtung (10) nach Anspruch 1, wobei die Vorrichtung (10) konfiguriert ist, um die ersten Signale (f2) und das zweite Signal (f3) räumlich und/oder zeitlich zueinander in Bezug zu setzen, um eine Information über die Beschaffenheit der abzutastenden Oberfläche (F) bereitstellen zu können.

3. Vorrichtung (10) nach einem der vorhergehenden Ansprüche, wobei der Rauheitsmesstaster(15) mit mehreren Freiheitsgraden auslenkbar ist, wobei die ersten Signale (f2) Information über die Auslenkung repräsentieren.

4. Vorrichtung (10) nach einem der vorhergehenden Ansprüche, wobei der Taststift (15.2) samt dem Tast-Gleitelement (15.3) und der Tastspitze (15.4) um eine Längsachse (A2) des Taststiftes (15.2) drehbar gelagert ist.

5. Vorrichtung (10) nach einem der vorhergehenden Ansprüche, wobei der Taststift (15.2) mindestens teilweise hohl ausgeführt ist, um im Inneren einen Hebelarm (13.1) aufzunehmen an dessen einem Ende die Tastspitze (15.4) sitzt.

6. Vorrichtung (10) nach einem der vorhergehenden Ansprüche, wobei in oder an dem Taststift (15.2) ein Elektromagnet angeordnet ist, um die Tastspitze (15.4) zurückziehen zu können.

## Claims

1. Apparatus (10) with a roughness sensing system (12) and a roughness measurement sensor (15), wherein the roughness measurement sensor (15) comprises a probe pin (15.2), a slide element and a probe tip (15.4), wherein
- the slide element is arranged at an extremal end of the probe pin (15.2) in the form of a scan-slide element (15.3),
- the probe tip (15.4) is integrated in the probe pin (15.2), wherein a distance (A) between the scan-slide element (15.3) and the probe tip (15.4) is predetermined,
- the apparatus (10) comprises a serving device which enables moving the probe pin (15.2) together with the scan-slide element (15.3) and the probe tip (15.4) jointly over a surface (F) to be scanned,
- the roughness sensing system (12) is a 1D-, 2D- or 3D-scanning system having a parallelogram configuration (31, 38; 40),
- the apparatus (10) comprises a 1D-, 2D-, 3D-transducer (44) being assigned to the scan-slide element (15.3) for capturing first signals (f2),
- the apparatus (10) comprises a further transducer being assigned to the probe tip (15.4) for capturing a second signal (f3), wherein
- the first signals (f2) allow a statement on the shape or geometry of the surface (F) to be scanned, and the second signal (f3) allows a statement on the roughness of the surface (F) to be scanned.

2. Apparatus (10) according to claim 1, wherein the apparatus (10) is configured in order to put the first signals (f2) and the second signal (f3) into relation with each other spatially and/or temporally, so as to be able to provide an information on the texture of the surface (F) to be scanned.

3. Apparatus (10) according to one of the preceding claims, wherein the roughness measurement sensor (15) is deflectable with a plurality of degrees of freedom, wherein the first signals (f2) represent information on the deflection.

4. Apparatus (10) according to one of the preceding claims, wherein the probe pin (15.2) together with the scan-slide element (15.3) and the probe tip (15.4) is supported rotatably about a longitudinal axis (A2) of the probe pin (15.2).

5. Apparatus (10) according to one of the preceding claims, wherein the probe pin (15.2) is formed at least partially hollow, so as to receive in its interior a lever arm (13.1), at one end of which the probe tip (15.4) is arranged.

6. Apparatus (10) according to one of the preceding claims, wherein an electromagnet is arranged in or at the probe pin (15.2), so as to be able to retract the probe tip (15.4).

## Revendications

1. Dispositif (10) pourvu d'un palpeur de détection de rugosité (12) et d'un palpeur de mesure de rugosité (15), le palpeur de mesure de rugosité (15) comprenant un crayon palpeur (15.2), un élément de glissement et une pointe de contact (15.4),
- l'élément de glissement sous la forme d'un élément de glissement palpeur (15.3) étant agencé à une extrémité du crayon palpeur (15.2),
- la pointe de contact (15.4) étant intégrée dans le crayon palpeur (15.2), un espace (A) étant prédéfini entre l'élément de glissement palpeur (15.3) et la pointe de contact (15.4),
- le dispositif (10) comprenant un système d'approche qui permet de déplacer ensemble le crayon palpeur (15.2) avec l'élément de glissement palpeur (15.3) et la pointe de contact (15.4) au-dessus d'une surface (F) à analyser,
- le système de détection de rugosité (12) étant un système de détection unidimensionnel, bidimensionnel ou tridimensionnel de conception en parallélogramme (31, 38 ; 40),
- le dispositif (10) comprenant un capteur de mesure (44) unidimensionnel, bidimensionnel ou tridimensionnel pour détecter des premiers signaux (f2) qui sont associés à l'élément de glissement palpeur (15.3),
- le dispositif (10) comprenant un autre capteur de mesure pour détecter un deuxième signal (f3) qui est associé à la pointe de contact (15.4),
- les premier signaux (f2) permettant d'avoir des informations sur la forme et la géométrie de la surface à analyser (F), et le deuxième signal (f3) permettant d'avoir des informations sur la rugosité de la surface à analyser (F).

2. Dispositif (10) selon la revendication 1, le dispositif (10) étant configuré pour mettre en relation dans l'espace et/ou dans le temps les premiers signaux (f2) et le deuxième signal (f3) pour pouvoir fournir une information sur la nature de la surface à analyser (F).

3. Dispositif (10) selon l'une des revendications précédentes, le palpeur de mesure de rugosité (15) pouvant être dévié avec plusieurs degrés de liberté, les premiers signaux (f2) représentant des informations sur la déviation.

4. Dispositif (10) selon l'une des revendications précédentes, le crayon palpeur (15.2) étant monté de façon à pouvoir tourner avec l'élément de glissement palpeur (15.3) et la pointe de contact (15.4) autour d'un axe longitudinal (A2) du crayon palpeur (15.2).

5. Dispositif (10) selon l'une des revendications précédentes, le crayon palpeur (15.2) étant réalisé au moins en partie creux pour pouvoir être logé à l'intérieur d'un levier (13.1), la pointe de contact (15.4) étant installé à une extrémité de ce dernier.

6. Dispositif (10) selon l'une des revendications précédentes, un électroaimant étant agencé dans ou sur le crayon palpeur (15.2) pour pouvoir retirer la pointe de contact (15.4).
